# EUROPEAN PATENT SPECIFICATION

(11) **EP 0 546 628 B1**
(45) Date of publication and mention of the grant of the patent: **04.12.1996**
(21) Application number: 92203794.0
(22) Date of filing: 07.12.1992
(51) Int. Cl.: H04N 7/084

(54) **Extended television system**
Erweitertes Fernsehsystem
Système de télévision étendu

(30) Priority: 13.12.1991 EP 91203289
(43) Date of publication of application: 16.06.1993
(73) Proprietor: Philips Electronics N.V., 5621 BA Eindhoven (NL)
(72) Inventor: Führen, Marcel, c/o Int. Octrooibureau B.V., NL-5656 AA Eindhoven (NL); Tichelaar, Johannes Y. c/o Int. Octrooibureau B.V., NL-5656 AA Eindhoven (NL); Battistella, Carlo Giovanni Teresa Primo, NL-5656 AA Eindhoven (NL)
(74) Representative: Steenbeek, Leonardus Johannes

(56) References cited:
- EP-A- 0 509 390
- WO-A-92/19072
- CH-A- 477 787
- US-A- 3 723 637
- US-A- 4 688 246
- FUNKSCHAU vol. 46, no. 24, May 1974, München, DE pages 396 - 398 ERICH ADLER 'Zwei Tonkanäle hoher Qualität'
- NACHRICHTENTECHNISCHE ZEITSCHRIFT vol. 30, no. 3, March 1977, BERLIN, DE pages 229 - 231 Jürgen Rötter 'Zum Vergleich der technischen Möglichkeiten zur Integration des Fernsehbegleittons in das Videosignal'

## Description

The invention relates to an extended television system in which an additional signal is encoded in a horizontal blanking interval of an extended television signal.

Such an extended television system is described in US-A-4,479,150. The method disclosed in that US patent is, however, not compatible with existing television receivers, because the color burst is replaced from the back porch to the bottom of the horizontal synchronizing pulse. Moreover, the horizontal synchronizing pulses are made smaller. The back porch is thus made broader and freed from the color burst so that there is more space to insert an additional signal. It will be evident that such an extended television signal cannot be received by standard television receivers in which horizontal synchronization pulses of normal width and the color burst are expected to be present within the back porch.

WO-A-92/19072, which counts as prior art within the meaning of Article 54(3) EPC with an earliest relevant priority date of 04.05.91, discloses a process for compatible transmission of additional information concerning a signal type code signal. This additional information concerning the signal type is transmitted in the region of the black porch. The code signal may be a color burst which starts earlier and/or ends later and/or a data signal which succeeds or coincides with the color burst. A DC-free encoded digital data signal having a data rate smaller than the color subcarrier frequency, e.g. a data rate of 1 Mbit/s, is mentioned to ensure compatibility to current receivers, in which neither the synchronization, nor the color demodulation or the clamping of current receivers is worsened. The code signal is used to signal reception of a standard signal (no letterbox, no additional information in the black bars), a letterbox signal without additional information in the black bars, a letterbox signal originating from movie film with additional information in the black bars, or a letterbox signal originating from camera with additional information in the black bars.

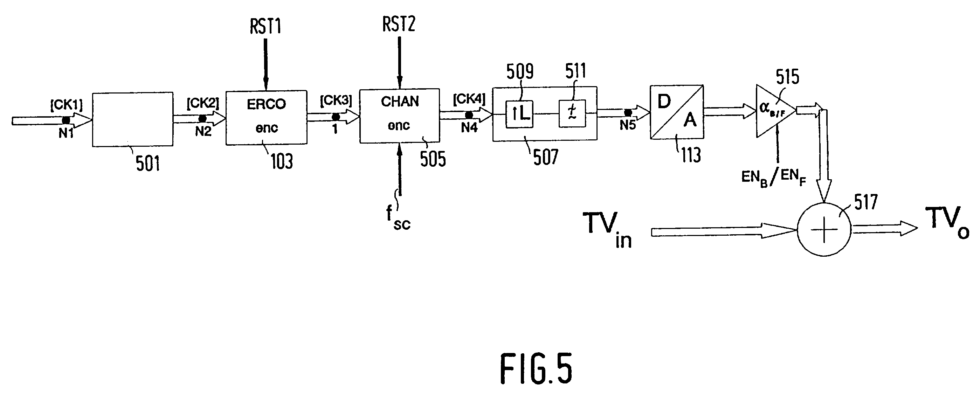

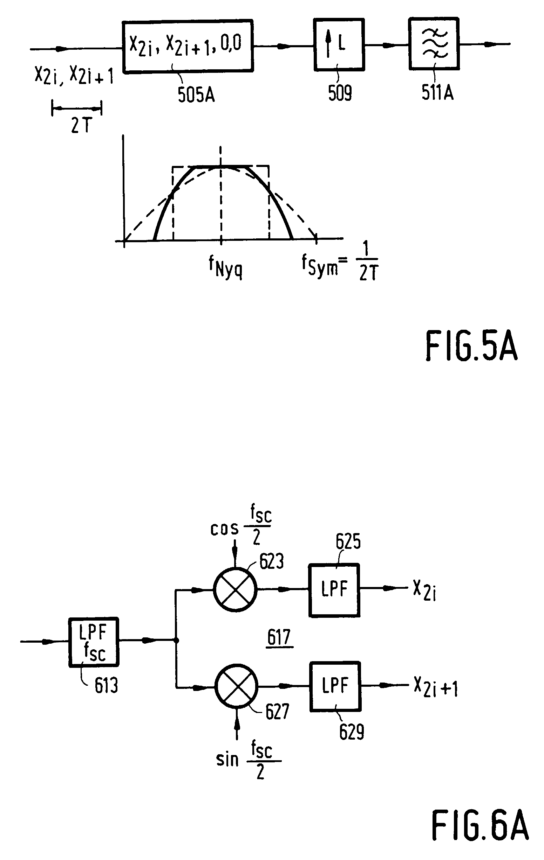

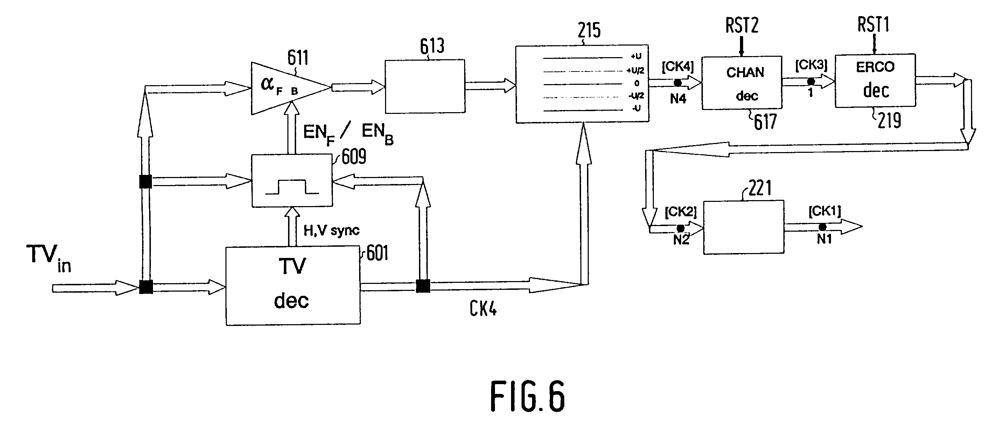

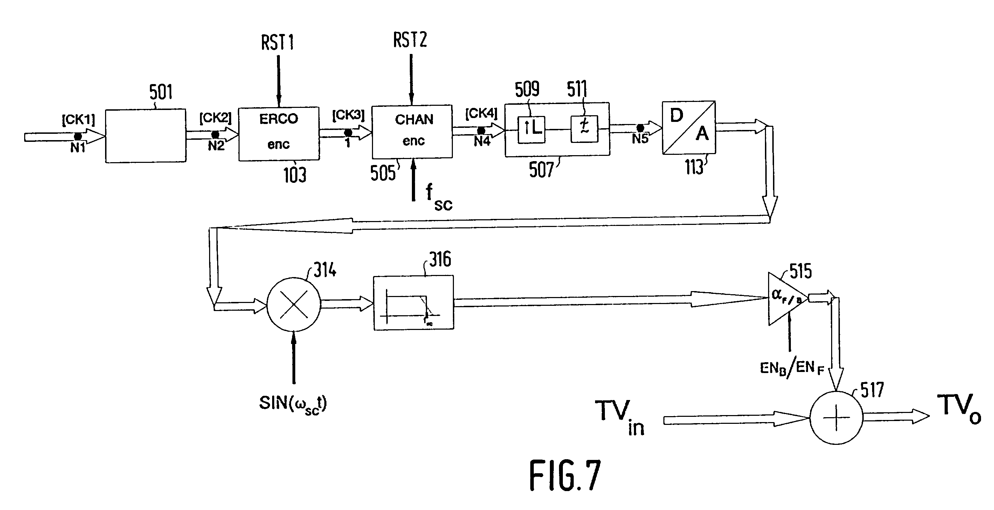

The article "Zwei Tonkanäle hoher Qualität" by E. Adler, Funkschau Vol. 46, no. 24, May 1974, pp. 396-398, discloses a digital transmission in the line blanking period. The horizontal synchronizing pulse is shortened to 1.5 µs, and the backporch is made longer: 8.5 µs. In the backporch ternary RZ or binary NRZ sound pulse packets are transmitted. The paragraph "Das erste Modell" and Figs. 5, 6 of the article show a digital sound signal transmission system having a pulse repetition frequency identical to the color subcarrier frequency in phase with the color burst, in which the ternary pulses have amplitudes of 100%, 50% or 10% of the white level, and in which the decoder can retrieve the color burst by limiting the amplitudes of the received pulses to 10% followed by a suitable amplification. The paragraph "Ein neues Modell" and Fig. 7 of the article show a digital sound signal having a pulse repetition frequency of twice the color subcarrier frequency, a separate transmission of color burst and sound signals in the back porch, in which the color burst is shortened and shifted within the back porch.

It is, inter alia, an object of the invention to provide an extended television signal which can easily be decoded by standard television receivers without compatibility problems.

To this end, one aspect of the invention provides a method of encoding an additional signal in horizontal blanking intervals of an extended television signal as set out in claim 1. Another aspect of the invention provides an apparatus for decoding an extended television signal as set out in claim 12. Still another aspect of the invention provides an extended television signal as set out in claim 20. Advantageous embodiments of the invention are set out in the subclaims.

In the extended television system according to the invention, the color burst is at its normal place. The additional signal is inserted into the back porch of the horizontal blanking interval, thereby overlapping the color burst to create more time for the additional signal. Any artifacts caused by the overlap of the color burst and the horizontal blanking interval, thereby overlapping the color burst to create more time for the additional signal. Any artifacts caused by the overlap of the color burst and the additional signal are avoided or at least sufficiently mitigated by processing the additional signal so that it has spectral zeros at n times the color subcarrier frequency for n equals zero and for n equals one.

In order to prevent horizontal synchronization errors from occurring in a standard receiver receiving the extended television signal of this invention, low-frequency components can be removed from the additional signal spectrum before transmission. Especially low-frequency components up to 1 MHz should be removed because in all present standard receivers a low-pass filter having a cut-off frequency at about 1 MHZ precedes the horizontal synchronizing circuit. Preferably, the additional signal spectrum between 1 MHz and 2 MHz should have no high energy components, because this low-pass filter has only a smooth roll-off beyond its cut-off frequency at 1 MHz. The latter constraint is met if the additional signal is sufficiently randomized, which can easily be achieved if the additional signal is a digital signal, but also if the additional signal is an analog signal with the aid of scrambling methods. Provisional measurements have shown that it is also sufficient if the additional signal spectrum is freed from components below 1 MHz and if the spectrum above 1 MHz does not contain line synchronous components. It appeared that if the above conditions for a proper functioning of the horizontal synchronizing circuit of a standard receiver are met, the standard receiver will not show clamping errors either if an extended television signal is received.

If the spectrum of the additional signal has little energy in a band of 1 MHz to 2 MHz around the color subcarrier frequency, automatic color control (ACC) circuits present in current television receivers will not be disturbed by the additional signal in the extended television signal.

In the PAL television transmission system, 620 back porches per frame (in lines 4 through 313 and in lines 316 through 625), each lasting about 5 µs, can be used for the transmission of additional information, while the 1 µs front porches of all 625 lines can be used.

The additional signal may comprise digital audio signals. The bitstream of this digital signal is multiplexed over 620 data burst fitting within the back porches and, if desired to create even more time for the additional signal, 620 or even 625 data burst fitting within the front porches. If the bitstream is not sufficiently random by itself, it should be randomized first.

The following four data transmission methods are possible.

The first method comprises a baseband transmission of a (pseudo) DC free channel code like bi-phase (see K.A. Schouhamer Immink, "Spectral null codes", IEEE Transactions on Magnetics, March 1990), twinned binary (see A. Croisier, "Introduction to pseudoternary transmission codes", IBM J. Res. Dev., July 1970), AMI, or 4B3T (see J.B. Buchner, "Ternary line codes", Philips Telecommunication Review, Vol. 34, No. 2, June 1976), all known as such to those skilled in the art. These channel codes should have such a symbol rate that the spectrum around the color subcarrier is sufficiently low. For example, a 6.3 MHz symbol rate using symbol pulses with a cosine roll-off spectrum at a roll-off factor of 0.4 would be sufficient. The book of J.G. Proakis, "Digital Communications", 2nd ed., McGraw-Hill 1989, provides sufficient explanations about the expressions roll-off spectrum and roll-off factor.

The second method comprises a baseband transmission in which the symbol clock is phase-locked to the color subcarrier frequency or to one of its harmonic frequencies. The use of the color subcarrier frequency yields the advantage that this frequency is already available in encoders and decoders, so that no "new" frequency needs to be generated. It is also possible that the symbol clock is phase-locked to a frequency which is r/k times the color subcarrier frequency, in which both r and k are integers unequal to zero. For example, r/k may be 3/2. The channel code should be chosen such that it complies with the above-mentioned conditions of being sufficiently DC free, sufficiently suppressing frequency components around the color subcarrier frequency, and fitting in with the transmission channel. If the symbol rate is twice the color subcarrier, the quad-phase coding method (known as such from Schouhamer Immink, mentioned above) and the partial response class 4 coding method (known as such from E.R. Kretzmer, "Generalization of a technique for binary data communication", IEEE Transactions on Communication Technology, Vol. COM-14, pp. 67-68, Feb. 1966) will suffice.

The third transmission method includes transmitting an amplitude modulate at preferably the color subcarrier frequency. The baseband data signal is encoded with a DC free channel code. The encoded signal contains no low frequency components which would disturb proper functioning of the automatic color control circuit of a standard receiver. The encoded signal is modulated onto the subcarrier. The symbol rate of the data signal should be such that after modulation, the spectrum below 1 MHz is empty. This can be achieved with a symbol rate of 5 MHz using pulses with a cosine roll-off spectrum and a roll-off factor of 0.37.

The fourth method has much in common with the third method. The symbol rate of the baseband data signal is now phase-locked to the color subcarrier. The channel code is chosen such that it is sufficiently DC free and that it yields a sufficient suppression of frequency components around the color subcarrier frequency. For example, a bi-phase code having a symbol rate equal to the color subcarrier frequency would suffice. The encoded signal is amplitude-modulated onto, preferably, the color subcarrier.

If the first or the third method is used, a symbol clock reference signal should also be transmitted for use by the enhanced receiver. A suitable symbol clock reference signal includes reference data bursts during the front porches of the television signal. These reference data bursts should have an integer number of cycles at the correct phase and at half the symbol rate of the data signal. If the second or the fourth method is used, no special symbol clock reference signal is necessary, because the color burst already fulfils this function.

The data transmission capacity provided by the present invention may advantageously be used for the transmission of high-quality digital sound signals or for a Teletext-like data service.

These and other aspects of the invention will be apparent from and elucidated with reference to the embodiments described hereinafter.

In the drawings:
Fig. 1 shows a block diagram of a first encoder operating in accordance with the present invention;
Fig. 1A elucidates the derivation of a bandpass filter for incorporation in the pulse shaper of Fig. 1 to obtain the spectral zeros at n times the color subcarrier frequency for n equals zero and for n equals one;
Fig. 1B shows a first embodiment of a channel encoder and pulse shaper combination for incorporation in the first encoder of Fig. 1 as well as the amplitude spectral density of the bandpass filter of the pulse shaper;
Fig. 1C shows a second embodiment of a channel encoder and pulse shaper combination for incorporation in the first encoder of Fig. 1 as well as the amplitude spectral density of the bandpass filter of the pulse shaper;
Fig. 2 shows a block diagram of a first decoder in accordance with the present invention;
Fig. 2A shows a second embodiment of a decoder filter and channel decoder combination for incorporation in the first decoder of Fig. 2 as well as the amplitude spectral density of the decoder filter;
Fig. 2B shows a third embodiment of a channel decoder for incorporation in the first decoder of Fig. 2;
Fig. 3 shows a block diagram of a second encoder operating in accordance with the present invention;
Fig. 4 shows a block diagram of a second decoder in accordance with the present invention;
Fig. 5 shows a block diagram of a third encoder operating in accordance with the present invention;
Fig. 5A shows an embodiment of a quad-phase channel encoder and pulse shaper combination for incorporation into the third encoder of Fig. 5;
Fig. 6 shows a block diagram of a third decoder in accordance with the present invention;
Fig. 6A shows an embodiment of a quad-phase channel decoder for incorporation into the third decoder of Fig. 6;
Fig. 7 shows a block diagram of a fourth encoder operating in accordance with the present invention;
Fig. 8 shows a block diagram of a fourth decoder in accordance with the present invention;
Fig. 9 shows a modification of the encoder of Fig. 5; and
Fig. 10 shows a modification of the decoder of Fig. 6.

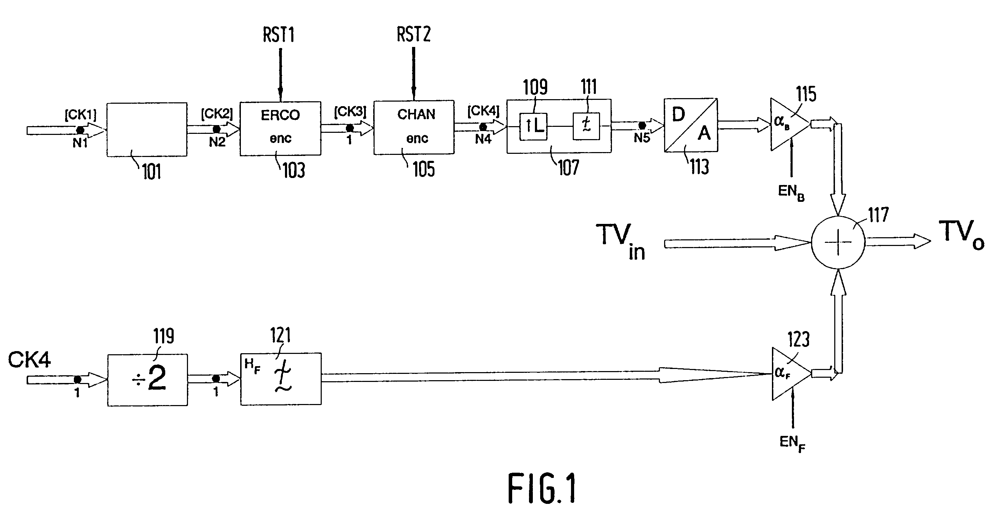

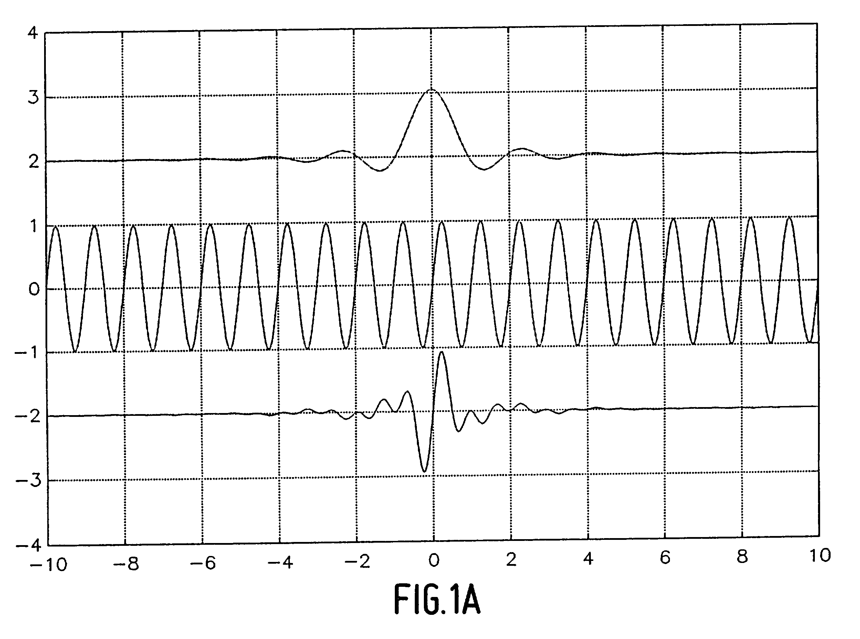

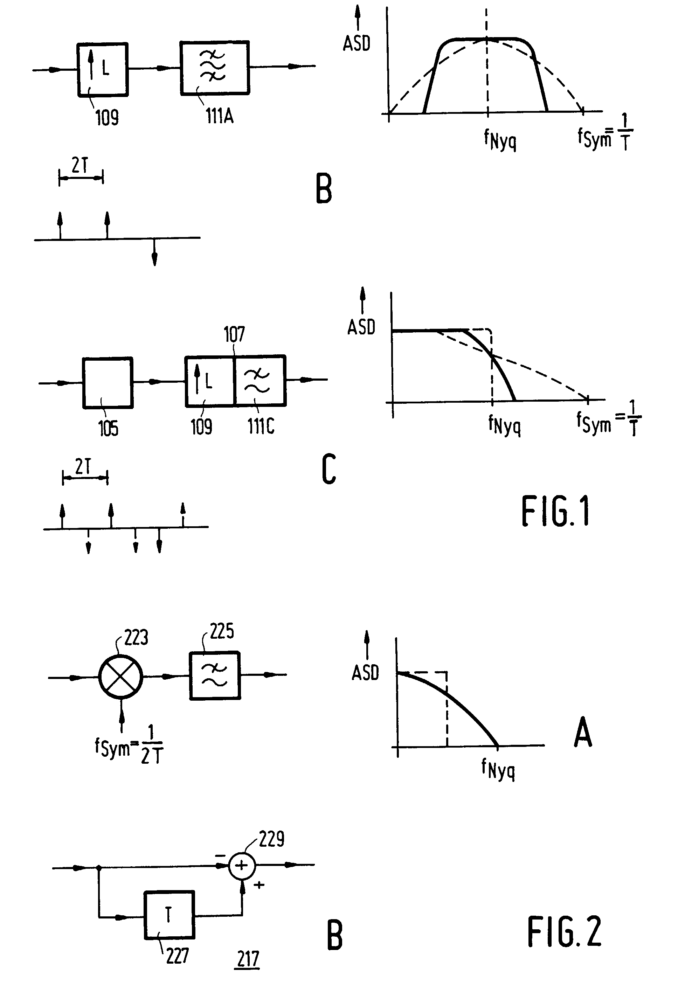

Fig. 1 shows a block diagram of a first encoder operating in accordance with the present invention. An additional digital signal is transmitted in base-band, while a reference data burst at half the symbol rate is placed in the front porches of the extended television signal. The input additional signal, which is preferably a digital signal having N1 bits per sample at a input clock frequency CK1, is applied to a reformatter 101. The reformatter 101, which may comprise a flexibly addressable RAM, separates the continuously applied digital signal into, for example, 620 pieces per television frame which will be encoded into the back porches of the television signal. The output signal of the reformatter 101 will thus have another, higher, clock frequency CK2 than the clock frequency CK1 of the input additional signal. The reformatter output signal has N2 bits per sample. Also, the output signal of the reformatter 101 is not continuously present, but only during the back porches.

To reduce sensitivity for transmission errors, the reformatter output signal is applied to an error correcting encoder 103, which may operate for each back porch separately, in which case the error correcting encoder 103 is reset at each back porch (RST1). The output signal of the error correcting encoder 103 is a one-bit signal at clock frequency CK3. This one-bit signal is applied to a channel encoder 105 which furnishes an output signal having N4 bits per sample at a clock frequency CK4. The channel encoder output signal has no frequencies around DC and may be a 2-level, 3-level or 4-level signal. The channel encoder 105 may be reset (RST2) at the beginning of each back porch.

The channel encoder output signal is applied to a pulse shaper 107 which at the same time increases the clock frequency by a factor L in block 109, which may be an interpolating filter, and which may have a cosine roll-off transfer characteristic (block 111). The symbol clock frequency increase in unit 109 allows for an easier filtering in filter 111. The N5 bit per sample output signal of the pulse shaper 107 is D/A converted in D/A converter 113, attenuated by a suitably chosen factor α-B in multiplier 115 during time slots (the back porches) determined by the enable signal EN-B, and finally added to the conventional television signal components TV-in in adder 117.

A clock signal CK4 which represents the symbol rate of the data signal at the output of the channel encoder, is divided by two in divider 119 and low-pass filtered in low-pass filter 121 so that an analog sine-shaped signal having a frequency of half the symbol rate and at the correct phase results. This reference signal is attenuated by a factor α-F in multiplier 123 during time slots (the front porches) determined by the enable signal EN-F, and added to the conventional television signal components TV-in in the adder 117 which furnishes the extended television signal TV-o.

The multiplier 115 ensures that the maximum amplitude of its output signal is about 25% of the peak white level. If the multiplier output amplitude were too large during the color burst periods, the output signal of the adder 117 could fall below the bottom level of the horizontal synchronizing pulse which would influence the intermediate frequency (IF) automatic gain control in the receiver. In principle, the output amplitude of the multiplier 123 may be larger, up till about 43% of the peak white level, so that the adder output signal could reach the bottom level of the horizontal synchronizing pulse.

Fig. 1A elucidates the derivation of a bandpass filter for incorporation in the pulse shaper 107 to obtain the spectral zeros at n times the color subcarrier frequency for n equals zero and for n equals one. The bandpass filter of Fig. 1A is based on an extension of Nyquist's telegraph transmission theory which is known as such from the article "The digital echo modulation" by Croisier and Pierret, IEEE Transactions on Communication Technology, vol. COM-18, No. 4, August 1970, pp. 367-376. The desired impulse response of the bandpass filter is shown in the lowest curve. This impulse response is obtained by a multiplication of an elementary pulse as shown at the top of Fig. 1A with a sine of the Nyquist frequency. The impulse response of the bandpass filter has the effect that at the same time the bandpass filter operates as a bi-phase encoder. As is known, a bi-phase encoder replaces each bit (which is either - 1 or +1) by two bits, the first bit being equal to the input bit and the second bit being equal to the inverse of the input bit. The above-mentioned article by Croisier et al. clearly shows how to build a bandpass filter starting from the desired impulse response of the filter.

Fig. 1B shows a first embodiment of a channel encoder and pulse shaper combination as well as the amplitude spectral density of the bandpass filter of the pulse shaper as derived in Fig. 1A. The embodiment shown in Fig. 1B has the great advantage that no separate channel encoder 105 is necessary, as the bandpass filter 111A which follows the clock frequency increase unit 109 already ensures that the desired spectral zeros are present. Fig. 1B further shows two possible amplitude spectral density curves having different roll-off factors. Of course, other roll-off factors are possible too. The symbol frequency f_{sym} indicated at the horizontal axis is equal to 1/T when the input bits of the pulse shaper are spaced 2T apart. The symbol frequency f_{sym} is twice the Nyquist frequency f_{Nyq}. For example, a 5 MHz symbol frequency at a roll-off factor of 0.5 would be appropriate to obtain the desired spectral zeros at 0 Hz and at the color subcarrier frequency f_{sc}.

Fig. 1C shows a second embodiment of a channel encoder and pulse shaper combination as well as the amplitude spectral density of the bandpass filter of the pulse shaper. In this embodiment, the input data bits spaced 2T apart and shown as uninterrupted arrows are applied to a bi-phase channel encoder 105 which between these input data bits inserts the inverses of these input bits as shown by interrupted arrows. The bi-phase encoded signal is applied to the pulse shaper 107 which comprises a low-pass filter 111C whose amplitude spectral density is shown for three possible roll-off factors. For example, a 6.3 MHz symbol frequency at a roll-off factor of 0.4 would be appropriate to obtain the desired spectral zeros at 0 Hz and at the color subcarrier frequency f_{sc}. The low-pass filter 111C is a half-Nyquist filter. Preferably, both the encoder and the decoder comprise such half-Nyquist or root-Nyquist filters, so that the combination of both filters forms a complete Nyquist filter. A Nyquist filter avoids intersymbol interference at the data evaluation instants. More details about the Nyquist filtering theory as such may be found in H. Nyquist's article "Certain topics in telegraph transmission theory", AIEE Trans., vol. 47, pp. 617-644, April 1928, and in the article by R.A. Gibby and J.W. Smith "Some extensions of Nyquist's telegraph transmission theory", Bell Syst. Tech. J., vol. 44, pp. 1487-1510, Sep. 1965. The use of a half-Nyquist filter in the decoder (which implies that the encoder also has a half-Nyquist filter) has the advantage that this decoder filter also contributes to noise reduction. However, it is also possible to use a complete Nyquist filter in the encoder, in which case no Nyquist filtering is carried out in the decoder.

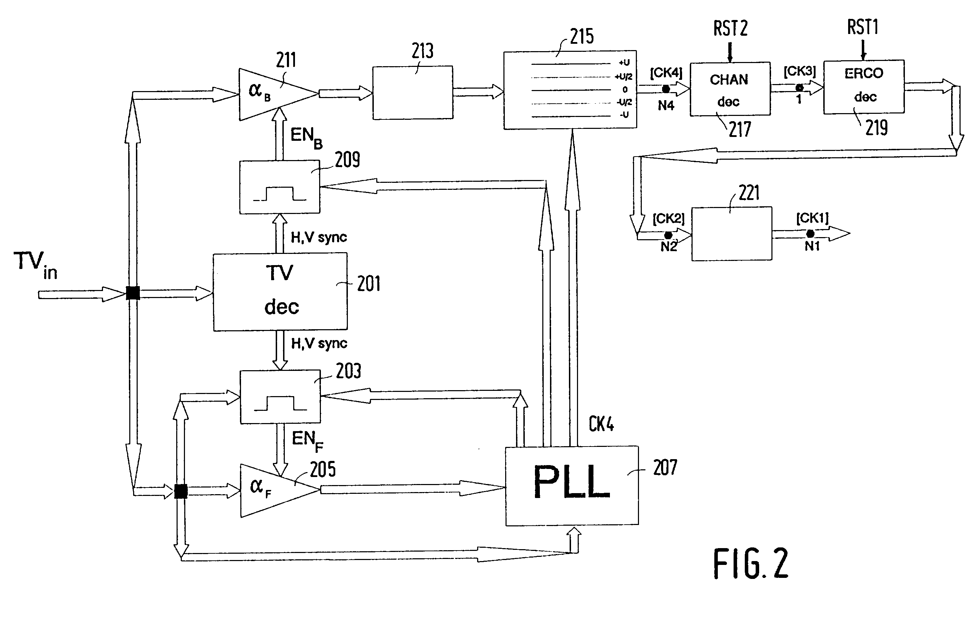

Fig. 2 shows a block circuit diagram of a decoder corresponding to the encoder of Fig. 1. The incoming extended television signal is applied to a TV decoder 201 which furnishes luminance and chrominance signals, not indicated in Fig. 2 in view of its irrelevancy to the present invention. The TV decoder 201 obtains horizontal and vertical synchronizing signals (H and V sync) from the incoming TV signal. In a lower branch of the circuit the front porches are gated out of the incoming extended television signal by means of a multiplier 205 which is controlled by a front porch gate pulse generator 203. The resulting front porch clock reference signal is amplified by the factor α-F in the multiplier 205 and applied to a phase-locked loop circuit 207. The gate pulse generator 203 and the PLL 207 receive the incoming extended TV signal. The phase-locked loop circuit 207 provides a regeneration of the symbol clock reference for sampling the incoming data containing signal at suitable time instants. The TV signal itself, the H and V sync signals, and the PLL can be considered as sources for deriving the front porch gate pulses.

In an upper branch of the decoder of Fig. 2, the back porches are gated out of the incoming extended television signal by means of a multiplier 211 which is controlled by a back porch gate pulse generator 209. The gate pulse generator 209 receives the H and V sync signals from the TV decoder 201 and is synchronized by the PLL 207. The resulting back porch data signal is amplified by the factor α-B in the multiplier 211 and applied to a filter 213.

The filter 213 may be a matched filter, a low-pass filter, a notch filter, or a combination of the above-mentioned filters. A matched filter means that the decoder comprises, in principle, a filter similar to the filter 111 in the encoder. As set out before, both the encoder and the decoder preferably comprise half-Nyquist filters. When the encoder comprises a full Nyquist filter, the decoder filter 213 only comprises a low-pass filter limiting to, for example, the color subcarrier frequency of 4.43 MHz. It goes without saying that possibilities between these two extremes might be designed. The filter 213 may also comprise a notch filter, which further suppresses the color subcarrier in the incoming data signal, to improve the bit error rate of the data signal.

The filter output signal is applied to a slicer and sampler circuit 215 which samples the data signal with the aid of the regenerated data clock signal CK4 from PLL 207. For example, if the data signal is a 2-level signal, the slicer 215 just checks whether the incoming data pulse exceeds the zero level. If the data signal is a 3-level signal, the slicer 215 compares the incoming data pulse to a positive threshold +U/2 and to a negative threshold -U/2 to decode the data pulse. The sampled data signal is subsequently applied through a channel decoder 217 and an error correcting decoder 219 to a reformatter 221 which supplies the decoded data signal. The channel decoder 217 is preferably placed directly after the filter 213 or combined with the filter 213, so that the combination of input data symbols which is carried out in the channel decoder contributes to a reduction of noise, so that a signal having a higher SNR is applied to the slicer 215 and better results are obtained. Further, the channel decoder 217 and/or the error correcting decoder 219 may be reset at the beginning of each data burst by reset signals RST2 and RST1, respectively. The reformatter 221 creates a continuous data stream at data clock CK1 from the separately received data bursts.

In a first embodiment of the decoder filter 213 and channel decoder 217, the decoder filter 213 is identical to the encoder bandpass filter described with reference to Figs. 1A and 1B, while no channel decoder 217 is necessary.

Fig. 2A shows a second embodiment of a decoder filter and channel decoder combination as well as the amplitude spectral density of the decoder filter. Again, no channel decoder 217 is present while the decoder filter 213 includes a multiplier 223 followed by a low-pass filter 225. The multiplier 223 multiplies the input data symbols by a signal having the symbol frequency of the input data symbols. The amplitude spectral density of the low-pass filter 225 is also shown.

Fig. 2B shows an embodiment of a bi-phase channel decoder which corresponds to the encoder embodiment of Fig. 1C. This bi-phase decoder 217 is preceded by a half-Nyquist filter 213 which is identical to the low-pass filter 111C shown in Fig. 1C. The decoder 217 comprises a delay 227 to which the input data symbols are applied and a subtracter 229 which subtracts the input data symbols from the delayed symbols.

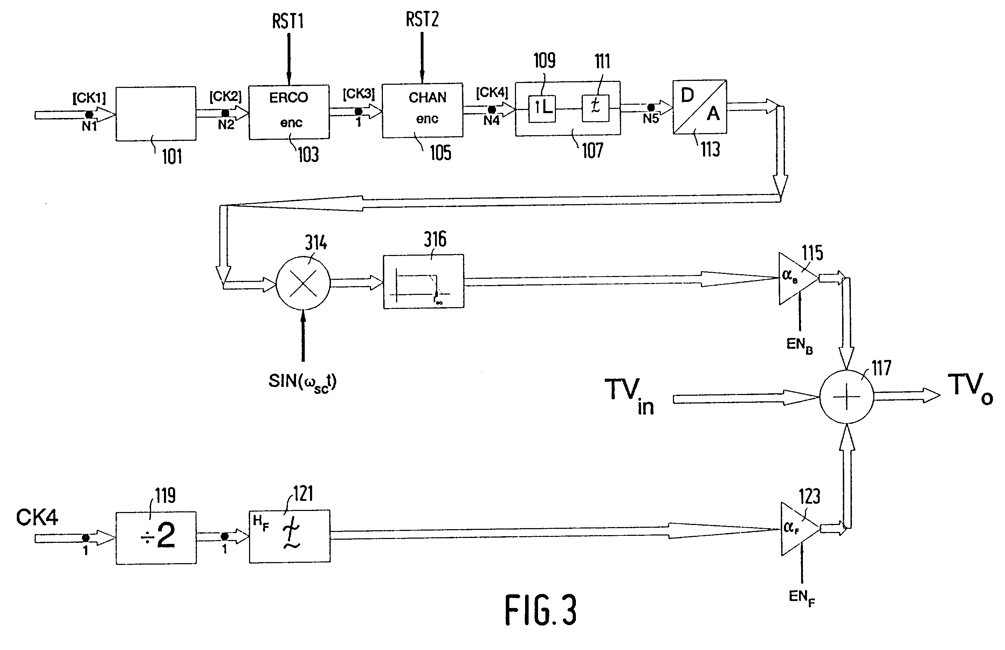

The encoders and decoders shown in Figs. 3 and 4, 5 and 6, and 7 and 8, resemble the encoder and decoder of Figs. 1 and 2 to a large extent, so that only the differences need to be indicated.

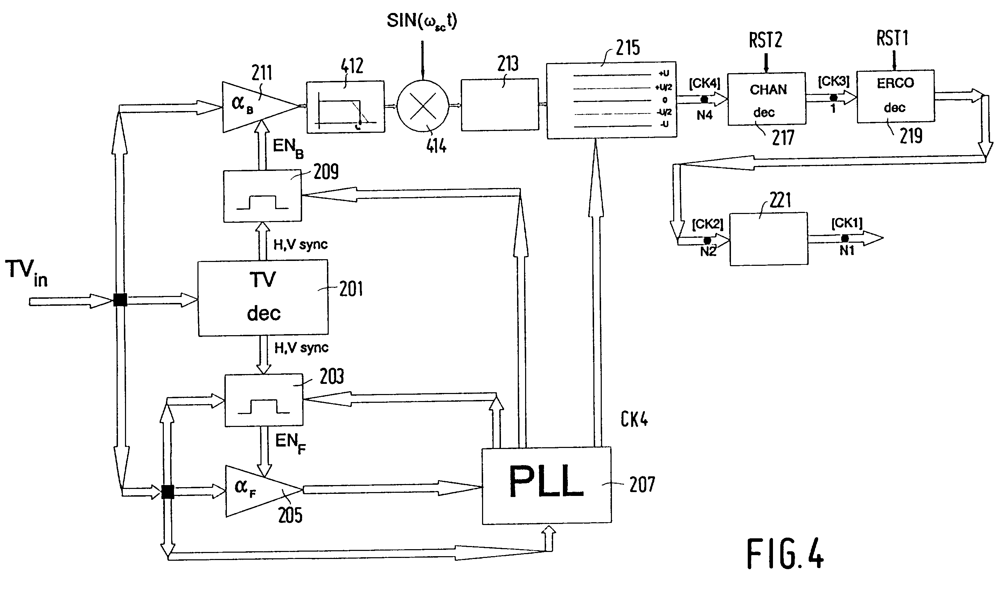

Figs. 3 and 4 show an implementation of the above-mentioned third method. In the encoder of Fig. 3, the digitized output signal of D/A converter 113 is modulated onto the color subcarrier; the modulation phase may be freely chosen (for example, 0, 45, 90, 135, 180, 225, 270 or 315 degrees). Alternatively, the input signal of D/A converter 113 may have been modulated onto the color subcarrier. The modulation is carried out by a modulator 314 followed by a low-pass filter (single sideband or vestigial sideband) 316. In the decoder of Fig. 4, the demodulation is carried out by a low-pass filter (single sideband or vestigial sideband) 412 followed by a demodulator 414 between the multiplier 211 and the filter 213.

Figs. 5 and 6 show block circuit diagrams of an encoder and a decoder, respectively, which operate in accordance with the above-mentioned second method. In the encoder of Fig. 5, the reformatter 501 distributes the continuously received data stream having N1 bits per sample over, for example, 620 times two (front porch and back porch) data bursts per video frame which after processing by the subsequent circuit elements will be transmitted during the front porches and back porches of the extended television signal. In the channel encoder 505, the clock signal CK4, i.e. the symbol rate, is phase-locked to (a harmonic frequency of or to a frequency being r/k times) the color subcarrier. The channel encoder 505 processes the incoming data bursts such that the 2-level, 3-level or 4-level output signal has a DC free spectrum in which the spectral components around the color subcarrier frequency are sufficiently suppressed, whereby for example, a spectral zero at the color subcarrier frequency is created in a manner as described in the above-mentioned article by Schouhamer Immink. The channel encoder 505 is followed by a pulse shaper 507 which comprises a symbol clock increase unit 509 and a filter 511. Multiplier 515 attenuates the analog data signal from D/A converter 113 by α-F during the front porches indicated by the enable signal EN-F, and by α-B during the back porches indicated by the enable signal EN-B. Adder 517 adds the attenuated data signal to the other television components TV-in to furnish the extended television signal TV-o.

Fig. 5A shows an embodiment of a quad-phase channel encoder and pulse shaper combination for incorporation in the encoder of Fig. 5. Input data bits x₂ᵢ and x₂ᵢ₊₁ are applied to a formatter 505A which adds two zero bits to two input bits each. The formatter output signal is applied through the symbol clock increase unit 509 to a bandpass filter 511A whose amplitude spectral density is also shown. This bandpass filter 511A is similar to the bandpass filter 111A of Figs 1A, 1B. However, the symbol frequency is 1/(2T) while the input data bits are still spaced apart by 2T. When the bi-phase encoding bandpass filter 511A processes the output signal of formatter 505A, the inverse of sample x₂ᵢ is put at the third position, while the inverse of sample x₂ᵢ₊₁ is put at the fourth position. The total sequence of each time two successive input bits and their two inverses corresponds to a quad-phase encoded sequence.

In the decoder of Fig. 6 which corresponds to the encoder of Fig. 5, the incoming extended television signal TV-in is applied to a television decoder 601 which furnishes the H and V sync signals and the regenerated clock CK4 which equals to (a harmonic) of the color subcarrier frequency. The incoming extended television signal TV-in and the regenerated clock CK4 are applied to gate pulse generator 609 for obtaining front porch gate signals EN-F and back porch gate signals EN-B. These gate signals EN-F, EN-B are applied to a multiplier 611 which also receives the incoming extended television signal TV-in, to obtain the data signals transmitted during the front porch and the back porch. These data signals are amplified by α-F during the front porches and by α-B during the back porches. The output of the multiplier 611 is applied to a decoder filter 613. The filtered signal from decoder filter 613 is applied through slicer 215 to channel decoder 617, which is followed by the error correction decoder 219 and the reformatter 221. Preferably, the channel decoder 617 precedes the slicer 215.

In a first and simple embodiment, the decoder filter 613 is similar to the encoder bandpass filter 511A shown in Fig. 5A, while the channel decoder 617 deletes all third and fourth symbols. In a second embodiment, which is shown in Fig. 6A, the decoder filter may be absent but is preferably a noise-reducing low-pass filter whose cut-off frequency is equal to the color subcarrier frequency. The filtered symbols are applied to a first branch including a multiplier 623 multiplying by a cosine-phase signal having half the color subcarrier frequency, followed by a low-pass filter 625 which furnishes the symbols x₂ᵢ. The multiplication by the cosine-phase signal combines the symbols x₂ᵢ and its inverse, while the symbols x₂ᵢ₊₁ and its inverse are multiplied by the zero-crossings of the cosine-phase signal. The filtered symbols from filter 613 are also applied to a second branch including a multiplier 627 multiplying by a sine-phase signal having half the color subcarrier frequency, followed by a low-pass filter 629 which furnishes the symbols x₂ᵢ₊₁. The multiplication by the sine-phase signal combines the symbols x₂ᵢ₊₁ and its inverse, while the symbols x₂ᵢ and its inverse are multiplied by the zero-crossings of the sine-phase signal. Quad-phase coding as such has been described in the article by J.A. Bixby and R.A. Ketcham, "Q.P., an improved code for high density digital recording", IEEE Transactions on Magnetics, vol. MAG-15, No. 6, Nov. 1979, p. 1467.

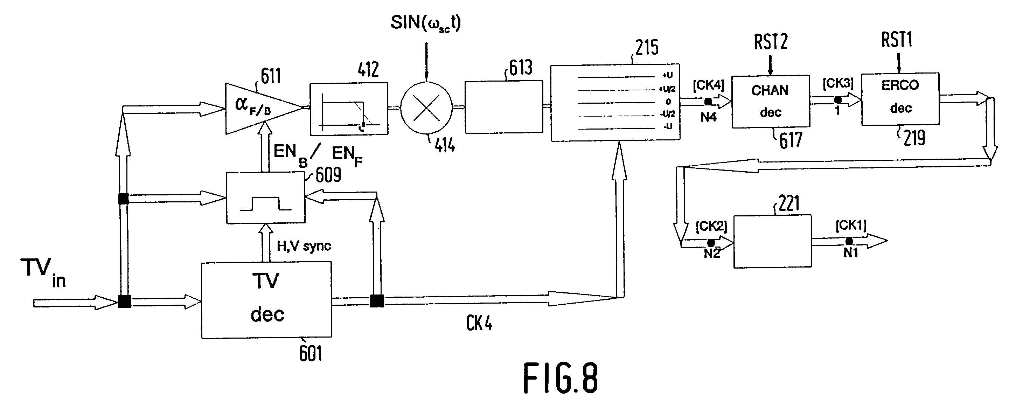

Figs. 7 and 8 show an implementation of the above-mentioned fourth method, i.e. the symbol rate CK4 is again phase-locked to (a harmonic of or r/k times) the color subcarrier frequency and the data signal is modulated onto the color subcarrier. In the encoder of Fig. 7, the digitized output signal of D/A converter 113 of the encoder of Fig. 5 is modulated onto the color subcarrier in a similar manner as in Fig. 3; the modulation phase may again be freely chosen. Alternatively, the input signal of D/A converter 113 may have been modulated onto the color subcarrier. In the decoder of Fig. 8, the output of the multiplier 611 of Fig. 6 is demodulated in a similar manner as in Fig. 4.

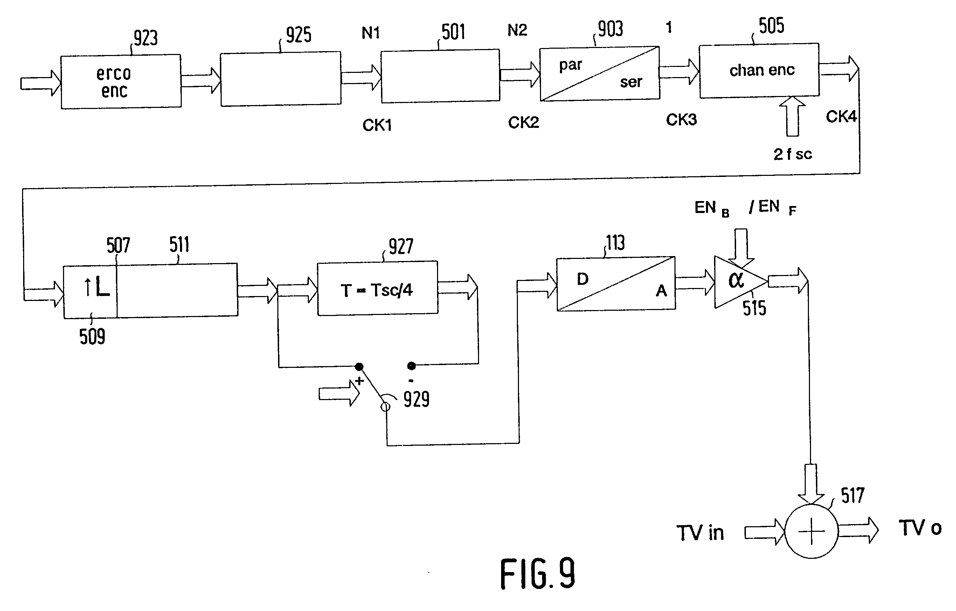

Fig. 9 shows a modification of the encoder of Fig. 5 in which the phase of the additional signal is subjected to a phase shift with reference to the color burst. In a first embodiment, the phase of the additional signal has been chosen such that during the color bursts, the amplitude of the sum of the data signal and the color burst is minimized. As has been set out above, to avoid problems when the extended television signal is received by a standard receiver, the amplitude of the sum of the data signal and the color burst should not become lower than the lowest level of the horizontal synchronizing pulse. Thus, without special measures, the amplitude of the data signal is limited to the difference between the lowest level of the color burst and the lowest level of the H-sync pulse. Applicants have found that if the phase of the additional data signal is suitably chosen, the amplitude of the sum of the data signal and the color burst is less than the sum of the amplitudes. This yields the advantage that with the same amplitude constraint that the amplitude of the sum does not fall below the bottom of the H-sync pulse, the amplitude of the data signal may become larger than the above-mentioned difference, so that the signal to noise ratio (SNR) of the data signal can be improved as a signal having a larger amplitude which is less sensitive to noise.

In a second phase-shifting embodiment, the aim of the phase shift is to minimize interference between the color burst and the additional signal, i.e. the phase shift is such that at the data evaluation instants of the additional signal, the color burst has its zero crossings. However, in this embodiment, the sum of the amplitudes of the color burst and the additional signal has its maximum value, so that the SNR of this embodiment is some dB's lower as compared to the first embodiment.

In Fig. 9, the incoming data signal is first applied to an error correction encoder 923 and a randomizer 925. If desired, both circuits may be omitted. The data signal is then applied, through the reformatter 501, to a parallel-to-series converter 903. The output of the parallel-to-series converter 903 is applied to the modulation encoder 505 which ensures that its output signal has a spectral zero at DC and at the Nyquist frequency which is the color subcarrier frequency; a (pseudo-)ternary partial response class 4 code which has been described as such in the above-mentioned Kretzer article or a binary quad-phase code which has been described as such in Schouhamer Imminks book "Coding Techniques for digital recorders", Prentice Hall (UK) Ltd. 1991, are preferably used for this purpose. The output data symbol frequency (CK4) is exactly twice the color subcarrier frequency; the subcarrier itself has been suppressed. In this manner, about 8 data symbols can be placed into each of the 625 available front porches of 1 µs each, and about 44 data symbols can be placed into each of the 620 available back porches of 5 µs each, so that a gross data rate of (8∗625 + 44∗620) ∗ 25 Hz = 807,000 data symbols per second results. The output of the modulation encoder 505 is applied to the pulse shaper 107 which increases the clock frequency by a factor L. The pulse shaper 107 includes an interpolating filter having a cosine roll-off transfer characteristic. The output data signal has been phase-locked to an exactly +π/4 rad phase-shifted version of the U-phase of the color subcarrier. The pulse shaper 107 is followed by a delay 927, providing a phase shift of one quarter of the color subcarrier period Tsc. The desired phase of the data signal is obtained from the input or the output of the delay 927 by a switch 929.

There are two possibilities for the phase difference between the data signal and the color burst. The first possibility is a phase difference of (i-0.5)∗π rad, where i is an integer. The switch 929 is controlled line-alternatingly in the same manner as the phase-alternating-line (PAL) phase switching of the V color difference signal. During the +V phase the switch 929 is in its left position and during the -V phase the switch 929 is in its right position. Consequently, a π/2 rad phase shift between the color burst and the data signal is obtained. In this embodiment, the amplitude of the sum of the color burst and the additional signal is minimized, so that the SNR of the additional signal is improved.

The second possible phase difference between the data signal and the color burst is a phase difference of i∗π rad, where i is an integer. By means of the same circuit elements 927 and 929, the switch 929 is in its left position during the +V phase and the switch 929 is in its right position during the -V phase. Consequently, a π rad phase shift between the color burst and the data signal is obtained. In this embodiment, the color burst has its zero crossings at the data evaluation instants of the additional signal, so that the interference between these two signals is minimized.

The switch 929 is followed by the circuit elements 113, 515 and 517 described with reference to Fig. 5. Although Fig. 9 is discussed as a modification of Fig. 5, Applicants do not exclude the possibility that the phase-shifting techniques can be applied in the circuit of Fig. 7 as well.

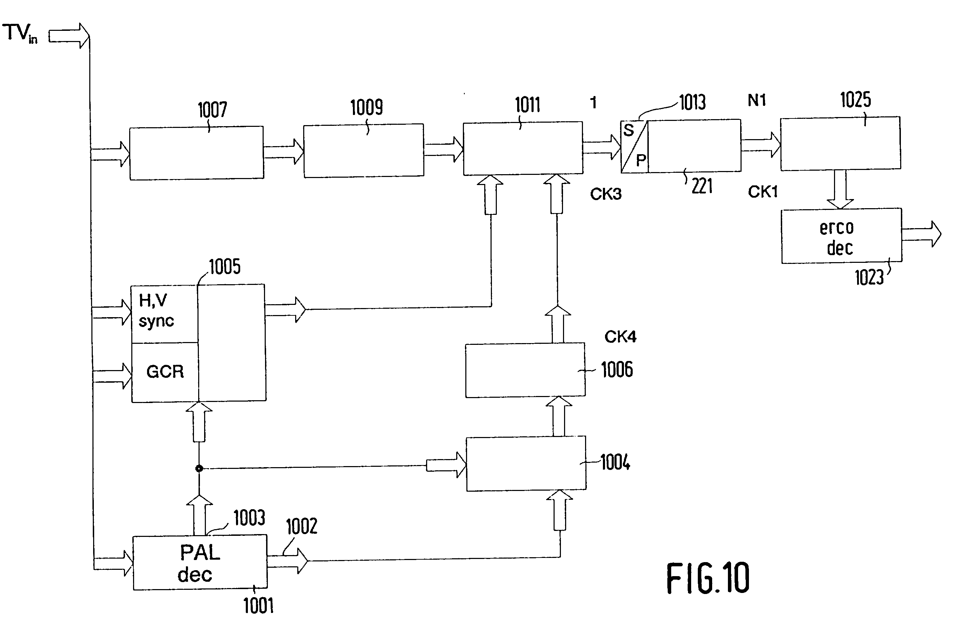

In the decoder shown in Fig. 10, which corresponds to the encoder shown in Fig. 9, the PAL decoder 1001 regenerates from the incoming extended composite video signal, a very stable version of the +V-phase of the suppressed color subcarrier which is supplied at its output 1003. The PAL decoder 1001 further supplies from its output 1002 the polarity of the V-component of the color burst, which information is required for determining the phase of the data signal. The regenerated V-phase and the polarity of the V-phase of the color burst provide sufficient information to obtain a data sampling clock which is phase-locked to the tops of the color burst (see the above-described first possible phase difference) or to the zero-crossings of the color bursts (see the above-described second possible phase difference). To this end, the V-phase signal from the output 1003 of the PAL decoder 1001 is subjected by phase shifter 1004 to a -π/4 rad phase shift when the polarity of the V-phase of the color burst is positive, while the V-phase signal from the output 1003 of the PAL decoder 1001 is subjected to a -3π/4 rad phase shift when the polarity of the V-phase of the color burst is negative. This phase shift ensures that the phase difference with the color burst is always equal to π/2, which corresponds to the above-mentioned first possibility which minimizes the sum amplitude. In the second possibility, in which interference between the additional signal and the color burst is minimized, the phase shifts are π/4 rad when the polarity of the V-phase of the color burst is positive, and 3π/4 rad phase shift when the polarity of the V-phase of the color burst is negative, or -3π/4 and -5π/4, respectively. The output signal of phase shifter 1004 is applied to a zero-crossing detector 1006 which supplies a data sampling clock signal of frequency CK4, which is twice the color subcarrier frequency.

A synchronizing circuit 1005 receives H and V sync signals and/or a ghost cancel reference (GCR) signal to determine at least one exact time reference in a video frame. The start instants of the data bursts can be determined by counting the number of half periods of the regenerated V-phase of the color subcarrier from an exactly determined time reference instant. The start instants and the duration of the data bursts are indicated by a front porch enable signal or back porch enable signal supplied from the output of the synchronizing circuit 1005.

The incoming extended composite video signal is also applied to a low-pass, matched or equalizing filter 1007 for data extraction. The design considerations for this filter are similar to those for the filter 213 of Fig. 2 which are discussed above. The filter 1007 may be followed by a notch filter 1009 for eliminating the color burst from the data signal to improve its bit error rate. The sampling and demodulation circuit 1011 samples the data bursts at the regenerated clock instants indicated by zero-crossings detector 1006 when an enable signal from the synchronizing circuit 1005 is present. The sampled data bursts are demodulated to obtain binary data bursts, which are applied to the reformatter 221 through the series-to-parallel converter 1013. If the encoder of Fig. 9 comprises the error correction encoder 923 and the randomizer 925, the reformatter 221 is followed by a derandomizer 1025 and an error correction decoder 1023 which supply the recovered data signal.

It will be evident that on the basis of the examples described above, those skilled in the art will be able to design many alternative embodiments all of which fall within the scope of this invention as defined by the following claims.

## Claims

1. A method of encoding an additional signal in horizontal blanking intervals of an extended television signal (TVₒ), comprising the steps of:
furnishing conventional television components (TVᵢₙ). including horizontal blanking intervals having front porches, horizontal synchronizing pulses and back porches with color bursts having a color subcarrier frequency, as well as luminance signals, and chrominance signals modulated onto a color subcarrier having said color subcarrier frequency;
processing (105) said additional signal to create low energy areas in a frequency spectrum of said additional signal at n times said color subcarrier frequency for n equals zero and for n equals one; and
combining (117) said conventional television components (TVᵢₙ) and said processed additional signal, whereby said additional signal is inserted into at least said back porches of said horizontal blanking intervals, thereby overlapping said color bursts, wherein the additional signal conveys digital sound signals or a Teletext-like data service.

2. A method as claimed in claim 1, wherein said additional signal is also inserted into said front porches of said horizontal blanking intervals.

3. A method as claimed in claim 1, comprising the further step of encoding (119, 121) a clock reference signal (CK4) in said front porches.

4. A method as claimed in claim 1, wherein a symbol clock of said additional signal is phase-locked to r/k times said color subcarrier, r and k being integers unequal to zero.

5. A method as claimed in claim 4, wherein said additional signal is subjected to a phase shift (927, 929) thereby providing that said additional signal has its data evaluation instants at zero-crossings of color bursts.

6. A method as claimed in claim 4, wherein said additional signal is subjected to a phase shift thereby reducing a maximum amplitude of a sum of said color bursts and said additional signal.

7. A method as claimed in claim 6, wherein r/k equals two and said additional signal is subjected to a line alternating phase shift alternating between zero and one quarter of the color subcarrier period.

8. A method as claimed in claim 1, wherein said additional signal is modulated (314) onto said color subcarrier.

9. A method as claimed in claim 1, wherein said processing step includes the step of bandpass filtering (111A) said additional signal to obtain a bi-phase encoded processed additional signal.

10. A method as claimed in claim 1, wherein said processing step includes the steps of bi-phase channel encoding said additional signal, and low-pass filtering the bi-phase channel encoded signal to obtain said processed additional signal.

11. A method as claimed in claim 1, wherein said processing step includes the steps of adding (505A) two zero symbols to two symbols each of said additional signal, to obtain a formatted signal, and bandpass filtering (511A) said formatted signal to obtain a quad-phase encoded processed additional signal.

12. An apparatus for decoding an extended television signal (TVᵢₙ) having conventional television components including horizontal blanking intervals having front porches, horizontal synchronizing pulses (H sync) and back porches with color bursts having a color subcarrier frequency, as well as luminance signals, and chrominance signals modulated onto a color subcarrier having said color subcarrier frequency, the decoding apparatus comprising:
means for receiving said extended television signal (TVᵢₙ) which further has an additional signal inserted into at least said back porches of said horizontal blanking intervals thereby overlapping said color bursts, said additional signal having low energy areas in a frequency spectrum of said additional signal at n times said color subcarrier frequency for n equals zero and for n equals one;
means for obtaining (201-209) a gate signal (EN_{B}) from said extended television signal (TVᵢₙ) during at least said back porches of said extended television signal (TVᵢₙ); and
means (211) for separating said additional signal from at least said back porches of said extended television signal (TVᵢₙ) by means of said gate signal (EN_{B}), wherein the additional signal conveys digital sound signals or a Teletext-like data service.

13. A decoding apparatus as claimed in claim 12, wherein a clock reference signal (CK4) has been encoded in said front porches, the apparatus comprising means for generating (201-207) said clock reference signal (CK4) from said front porches.

14. A decoding apparatus as claimed in claim 12, wherein a symbol clock of said additional signal has been phase-locked to m times said color subcarrier, m being a positive integer, the apparatus comprising means for generating said symbol clock from said color subcarrier.

15. A decoding apparatus as claimed in claim 12, wherein said additional signal has been modulated onto said color subcarrier, said separating means comprising means for demodulating (414) the modulated additional signal.

16. A decoding apparatus as claimed in claim 12, wherein said additional signal has been subjected to a phase shift, said separating means comprising means for determining (1001) said phase shift to which said additional signal has been subjected, and means coupled to said phase shift determining means for compensating (1004) for said phase shift.

17. A decoding apparatus as claimed in claim 12, further comprising means coupled to said separating means (211) for decoding said additional signal, said decoding means comprising band-pass filter means for decoding a bi-phase or quad-phase encoded additional signal.

18. A decoding apparatus as claimed in claim 12, further comprising means coupled to said separating means (211) for decoding said additional signal, said decoding means comprising a multiplier (223) for multiplying said additional signal by a signal having a symbol frequency of said additional signal, and low-pass filter means (225) coupled to said multiplier (223) for furnishing a decoded additional signal.

19. A decoding apparatus as claimed in claim 12, further comprising means coupled to said separating means (611) for decoding said additional signal, said decoding means comprising first demodulator means (623) for multiplying said additional signal by a cosine-phase signal to obtain first symbols of a decoded additional signal, and second demodulator means (627) for multiplying said additional signal by a sine-phase signal to obtain second symbols of said decoded additional signal.

20. An extended television signal, comprising:
conventional television components including horizontal blanking intervals having front porches, horizontal synchronizing pulses and back porches with color bursts having a color subcarrier frequency, as well as luminance signals, and chrominance signals modulated onto a color subcarrier having said color subcarrier frequency; and
an additional signal having low energy areas in a frequency spectrum of said additional signal at n times said color subcarrier frequency for n equals zero and for n equals one, said additional signal being inserted into at least said back porches of said horizontal blanking intervals, thereby overlapping said color bursts, wherein the additional signal conveys digital sound signals or a Teletext-like data service.

## Patentansprüche

1. Verfahren zum Codieren eines zusätzlichen Signals in Horizontal-Austastintervallen eines erweiterten Fernsehsignals (TV₀), mit den nachfolgenden Verfahrensschritten:
das Liefern herkömmlicher Fernsehanteile (TVᵢₙ) mit Horizontal-Austastintervallen mit vorderen Schwarzschultern, Horizontal-Synchronimpulsen und mit hinteren Schwarzschultern mit Farbsynchronsignalen mit einer Farbhilfsträgerfrequenz, sowie von Leuchtdichtesignalen und Farbartsignalen, die einem Farbhilfsträger mit der genannten Farbhilfsträgerfrequenz aufmoduliert sind;
das Verarbeiten (105) des genannten zusätzlichen Signals zum Erzeugen von Gebieten niedriger Energie in einem Frequenzspektrum des genannten zusätzlichen Signals bei n-facher genannter Farbhilfsträgerfrequenz für n gleich Null und für n gleich eins; und
das Kombinieren (117) der genannten herkömmlichen Fernsehanteile (TVᵢₙ) und des genannten verarbeiteten zusätzlichen Signals, wobei das genannte zusätzliche Signals in wenigstens die genannten hinteren Schwarzschultern der genannten Horizontal-Austastintervalle eingefügt wird, wodurch Überlappung der genannten Farbbursts erfolgt, wobei das zusätzliche Signal digitale Tonsignale oder einen Videotext-ähnlichen Datendienst transportiert.

2. Verfahren nach Anspruch 1, wobei das genannte zusätzliche Signal ebenfalls in die genannten vorderen Schwarzschultern der genannten Horizontal-Austastintervalle eingefügt wird.

3. Verfahren nach Anspruch 1, mit dem weiteren Verfahrensschritt der Codierung (119, 121) eines Taktbezugssignals (CK4) in den genannten vorderen Schwarzschultern.

4. Verfahren nach Anspruch 1, wobei ein Symboltakt des genannten zusätzlichen Signals dem r/k-fachen genannten Farbhilfsträger aufmoduliert ist, wobei r und k ganze Zahlen ungleich Null sind.

5. Verfahren nach Anspruch 4, wobei das genannte zusätzliche Signal einer Phasenverschiebung (927, 929) ausgesetzt wird, wodurch dafür gesorgt wird, daß das genannte zusätzliche Signal die Datenbewertungszeitpunkte zu den Nullübergängen der Farbsynchronsignale hat.

6. Verfahren nach Anspruch 4, wobei das genannte zusätzliche Signal einer Phasenverschiebung ausgesetzt wird, wobei eine maximale Amplitude einer Summe der genannten Farbsynchronsignale und des genannten zusätzlichen Signals verringert wird.

7. Verfahren nach Anspruch 6, wobei r/k dem Wert zwei entspricht und das genannte zusätzliche Signal einer Zeilenwechselphasenverschiebung, abwechselnd zwischen Null und einem Viertel der genannten Farbhilfsträgerperiode, ausgesetzt wird.

8. Verfahren nach Anspruch 1, wobei das genannte zusätzliche Signal dem genannten Farbhilfsträger aufmoduliert (314) wird.

9. Verfahren nach Anspruch 1, wobei der genannte Verarbeitungsschritt den Schritt der Bandpaßfilterung (111A) des genannten zusätzlichen Signals umfaßt zum Erhalten eines doppelphasencodierten verarbeiteten zusätzlichen Signals.

10. Verfahren nach Anspruch 1, wobei der genannte Verarbeitungsschritt die Schritte der Doppelphasenkanalcodierung des genannten zusätzlichen Signals umfaßt, und das Tiefpaßfiltern des doppelphasenkanalcodierten Signals zum Erhalten des genannten verarbeiteten zusätzlichen Signals.

11. Verfahren nach Anspruch 1, wobei der genannte Verarbeitungsschritt die Schritte der Addierung (505A) zweier Null-Symbole zu zwei Symbolen je von dem genannten zusätzlichen Signals zum Erhalten eines formatierten Signals und das Bandpaßfiltern (511A) des genannten formatierten Signals zum Erhalten eines vierphasencodierten verarbeiteten zusätzlichen Signals.

12. Gerät zum Decodieren eines erweiterten Fernsehsignals (TVᵢₙ) mit herkömmlichen Fernsehanteilen einschließlich Horizontal-Austastintervalle mit vorderen Schwarzschultern, Horizontal-synchronimpulsen (H sync) und mit hinteren Schwarzschultern mit Farbsynchronsignalen mit einer Farbhilfsträgerfrequenz, sowie von Leuchtdichtesignalen und Farbartsignalen, die einem Farbhilfsträger mit der genannten Farbhilfsträgerfrequenz aufmoduliert sind, wobei das Decodierungsgerät die nachfolgenden Elemente aufweist:
Mittel zum Empfangen des genannten erweiterten Fernsehsignals (TVᵢₙ), das weiterhin ein zusätzliches Signal aufweist, das in wenigstens die genannten hinteren Schwarzschultern der genannten Horizontal-Austastintervalle eingefügt wird, wodurch Überlappung der genannten Farbbursts erfolgt, wobei das zusätzliche Signal Gebiete niedriger Energie in einem Frequenzspektrum des genannten zusätzlichen Signals bei n-facher genannter Farbhilfsträgerfrequenz für n gleich Null und für n gleich eins aufweist;
Mittel zum Erhalten (201-209) eines Gate-Signals (EN_{B}) aus dem genannten erweiterten Fernsehsignal (TVᵢₙ) während wenigstens der genannten hinteren Schwarzschultern des genannten erweiterten Fernsehsignals (TVᵢₙ); und
Mittel (211) zum Trennen des genannten zusätzlichen Signals von wenigstens der genannten hinteren Schwarzschultern des genannten zusätzlichen Signals (TVᵢₙ) mittels des genannten Gate-Signals (EN_{B}), wobei das zusätzliche Signal digitale Tonsignale oder einen Videotext-ähnlichen Datendienst transportiert.

13. Decodierungsgerät nach Anspruch 12, wobei ein Taktbezugssignal (CK4) in den genannten vorderen Schwarzschultern codiert ist, wobei das Gerät Mittel aufweist zum Erzeugen (201-207) des genannten Taktbezugssignals (CK4) aus den genannten vorderen Schwarzschultern.

14. Decodierungsgerät nach Anspruch 12, wobei ein Symboltakt des zusätzlichen Signals zu dem m-fachen Farbhilfsträger phasenverriegelt ist, wobei m eine positive ganze Zahl ist, wobei das Gerät Mittel aufweist zum Erzeugen des genannten Symboltaktes aus dem genannten Farbhilfsträger.

15. Decodierungsgerät nach Anspruch 12, wobei das genannte zusätzliche Signal dem genannten Farbhilfsträger aufmoduliert ist, wobei die genannten Trennmittel Mittel aufweisen zum Demodulieren (414) des genannten modulierten zusätzlichen Signals.

16. Decodierungsgerät nach Anspruch 12, wobei das genannte zusätzliche Signal einer Phasenverschiebung ausgesetzt ist, wobei die genannten Trennmittel Mittel aufweisen zum Bestimmen (1001) der genannten phasenverschiebung, der das genannte zusätzliche Signal ausgesetzt worden ist, und Mittel, die mit den genannten Phasenverschiebungsbestimmungsmitteln gekoppelt sind zum Ausgleichen (1004) der genannten Phasenverschiebung.

17. Decodierungsgerät nach Anspruch 12, weiterhin mit Mitteln, die mit den genannten Trennmitteln (211) gekoppelt sind zum Decodieren des genannten zusätzlichen Signals, wobei die genannten Decodierungsmittel Bandpaßfiltermittel aufweisen zum Decodieren eines doppelphasen- oder vierphasencodierten zusätzlichen Signals.

18. Decodierungsgerät nach Anspruch 12, weiterhin mit Mitteln, die mit den genannten Trennmitteln (211) gekoppelt sind zum Decodieren des genannten zusätzlichen Signals, wobei die genannten Decodierungsmittel einen Multiplizierer (223) aufweisen zum Multiplizieren des genannten zusätzlichen Signals mit einem SiGnal mit einer Symbolfrequenz des genannten zusätzlichen Signals, und Tiefpaßfiltermittel (225), die mit dem genannten Multiplizierer (223) gekoppelt sind zum Liefern eines decodierten zusätzlichen Signals.

19. Decodierungsgerät nach Anspruch 12, weiterhin mit Mitteln, die mit den genannten Trennmitteln (611) gekoppelt sind zum Decodieren des genannten zusätzlichen Signals, wobei diese Decodierungsmittel erste Demodulationsmittel (623) aufweisen zum Multiplizieren des genannten zusätzlichen Signals mit einem Kosinus-Phasensignal zum Erhalten erster Symbole eines decodierten zusätzlichen Signals, und zweite Demodulationsmittel (627) zum Multiplizieren des genannten zusätzlichen Signals mit einem Sinus-Phasensignals zum Erhalten zweiter Symbole des genannten zusätzlichen Signals.

20. Erweitertes Fernsehsignal, mit:
herkömmlichen Fernsehanteilen mit Horizontal-Austastintervallen mit vorderen Schwarzschultern, Horizontal-Synchronimpulsen und mit hinteren Schwarzschultern mit Farbsynchronsignalen mit einer Farbhilfsträgerfrequenz, sowie von Leuchtdichtesignalen und Farbartsignalen, die einem Farbhilfsträger mit der genannten Farbhilfsträgerfrequenz aufmoduliert sind; und
einem zusätzlichen Signal mit Gebieten niedriger Energie in einem Frequenzspektrum des genannten zusätzlichen Signals mit n-facher Farbhilfsträgerfrequenz für n gleich Null und für n gleich eins, wobei das genannte zusätzliche Signal in wenigstens die genannten hinteren Schwarzschultern der genannten Horizontal-Austastintervalle eingefügt sind, wobei Überlappung der genannten Farbbursts erfolgt, wobei das zusätzliche Signal digitale Tonsignale oder einen Videotext-ähnlichen Datendienst transportiert.

## Revendications

1. Procédé de codage d'un signal additionnel dans des intervalles de suppression de ligne d'un signal de télévision étendu (TVₒ) comprenant les étapes suivantes:
délivrer des composantes de télévision classiques (TVᵢₙ) comprenant des intervalles de suppression de ligne ayant des paliers avant, des impulsions de synchronisation horizontale et des paliers arrière avec des salves couleur ayant une fréquence de sous-porteuse de chrominance, ainsi que des signaux de luminance et des signaux de chrominance modulés sur une sous-porteuse de chrominance ayant ladite fréquence de sous-porteuse de chrominance,
traiter (105) ledit signal additionnel pour créer des zones de faible énergie dans un spectre de fréquences dudit signal additionnel à n fois ladite fréquence de la sous-porteuse de chrominance pour n égal à zéro et n égal à un, et
combiner (117) lesdites composantes de télévision classiques (TVᵢₙ) et ledit signal additionnel traité de telle sorte que ledit signal additionnel soit inséré dans au moins lesdits paliers arrière desdits intervalles de suppression de ligne, en chevauchant de la sorte lesdites salves couleur, le signal additionnel acheminant des signaux sonores numériques ou un service de données de type télétexte.

2. Procédé selon la revendication 1, dans lequel ledit signal additionnel est également inséré dans lesdits paliers avant desdits intervalles de suppression de ligne.

3. Procédé selon la revendication 1, comprenant l'étape consistant en outre à coder (119, 121) un signal de référence d'horloge (CK4) dans lesdits paliers avant.

4. Procédé selon la revendication 1, dans lequel une horloge de symboles dudit signal additionnel est verrouillée en phase sur r/k fois ladite sous-porteuse de chrominance, r et k étant deux nombres entiers qui ne sont pas égaux à zéro.

5. Procédé selon la revendication 4, dans lequel ledit signal additionnel est soumis à un décalage de phase (927, 929) assurant que ledit signal additionnel ait ses instants d'évaluation de données aux passages par zéro de salves couleur.

6. Procédé selon la revendication 4, dans lequel ledit signal additionnel est soumis à un décalage de phase de manière à réduire une amplitude maximum d'une somme desdites salves couleur et dudit signal additionnel.

7. Procédé selon la revendication 6, dans lequel r/k est égal à 2 et ledit signal additionnel est soumis à un décalage de phase en alternance de ligne entre zéro et un quart de la période de la sous-porteuse de chrominance.

8. Procédé selon la revendication 1, dans lequel ledit signal additionnel est modulé (314) sur ladite sous-porteuse de chrominance.

9. Procédé selon la revendication 1, dans lequel ladite étape de traitement comprend l'étape de filtrage passe-bande (111A) dudit signal additionnel pour obtenir un signal additionnel traité codé biphase.

10. Procédé selon la revendication 1, dans lequel ladite étape de traitement comprend les étapes de codage en canal biphase dudit signal additionnel et de filtrage passe-bas dudit signal codé en canal biphase pour obtenir ledit signal additionnel traité.

11. Procédé selon la revendication 1, dans lequel ladite étape de traitement comprend les étapes d'addition (505A) de deux symboles de zéro à deux symboles chacun dudit signal additionnel, pour obtenir un signal formaté, et de filtrage passe-bande (511A) dudit signal formaté pour obtenir un signal additionnel traité codé en quadrature de phase.

12. Appareil de décodage d'un signal de télévision étendu (TVᵢₙ) ayant des composantes de télévision classiques comprenant des intervalles de suppression de ligne ayant des paliers avant, des impulsions de synchronisation horizontales (sync H) et des paliers arrière avec des salves couleur ayant une fréquence de sous-porteuse de chrominance, ainsi que des signaux de luminance et des signaux de chrominance modulés sur la sous-porteuse de couleur ayant ladite fréquence de sous-porteuse de chrominance, l'appareil de décodage comprenant :
des moyens pour recevoir ledit signal de télévision étendu (TVᵢₙ) qui a en outre un signal additionnel inséré dans au moins lesdits paliers arrière desdits intervalles de suppression de ligne, en sorte de chevaucher lesdites salves couleur, ledit signal additionnel ayant des zones de faible énergie dans un spectre de fréquences dudit signal additionnel à n fois ladite fréquence de la sous-porteuse de chrominance pour n égal à zéro et n égal à un,
des moyens pour obtenir (201-209) un signal de déclenchement (EN_{B}) dudit signal de télévision étendu (TVᵢₙ) au cours d'au moins lesdits paliers arrière dudit signal de télévision étendu (TVᵢₙ), et
des moyens (211) pour séparer ledit signal supplémentaire d'au moins lesdits paliers arrière dudit signal de télévision étendu (TVᵢₙ) à l'aide dudit signal de déclenchement (EN_{B}), dans lequel le signal supplémentaire achemine des signaux sonores numériques ou un service de données de type télétexte.

13. Appareil de décodage selon la revendication 12, dans lequel un signal de référence d'horloge (CK4) a été codé dans lesdits paliers avant, l'appareil comprenant des moyens pour générer (201-207) ledit signal de référence d'horloge (CK4) provenant desdits paliers avant.

14. Appareil de décodage selon la revendication 12, dans lequel un signal d'horloge de symboles dudit signal additionnel a été verrouillé en phase sur n fois ladite sous-porteuse de chrominance, n étant un nombre entier positif, l'appareil comprenant des moyens pour générer ledit signal d'horloge de symboles de ladite sous-porteuse de chrominance.

15. Appareil selon la revendication 12, dans lequel ledit signal additionnel a été modulé sur ladite sous-porteuse de chrominance, lesdits moyens de séparation comprenant des moyens pour démoduler (414) le signal additionnel modulé.

16. Appareil de décodage selon la revendication 12, dans lequel ledit signal additionnel a été soumis à un décalage de phase, lesdits moyens de séparation comprenant des moyens pour déterminer (1001) ledit décalage de phase auquel ledit signal additionnel a été soumis, et des moyens couplés auxdits moyens de détermination de décalage de phase pour compenser (1004) ledit décalage de phase.

17. Appareil de décodage selon la revendication 12, comprenant en outre des moyens couplés auxdits moyens de séparation (211) pour décoder ledit signal additionnel, lesdits moyens de décodage comprenant des moyens de filtrage passe-bande pour décoder un signal additionnel codé en biphase ou en quadrature de phase.

18. Appareil de décodage selon la revendication 12, comprenant en outre, des moyens couplés auxdits moyens de séparation (211) pour décoder ledit signal additionnel, lesdits moyens de décodage comprenant un multiplicateur (223) pour multiplier ledit signal additionnel par un signal ayant une fréquence de symboles dudit signal additionnel, et des moyens de filtrage passe-bas (225) couplés audit multiplicateur (223) pour délivrer un signal additionnel décodé.

19. Appareil de décodage selon la revendication 12, comprenant en outre des moyens couplés auxdits moyens de séparation (611) pour décoder ledit signal additionnel, lesdits moyens de décodage comprenant un premier moyen de démodulation (623) pour multiplier ledit signal additionnel par un signal en phase cosinusoïdale pour obtenir les premiers symboles d'un signal additionnel décodé, et un deuxième moyen de démodulation (627) pour multiplier ledit signal additionnel par un signal en phase sinusoïdale pour obtenir les seconds symboles dudit signal additionnel décodé.

20. Signal de télévision étendu comprenant :
des composantes de télévision classiques comprenant des intervalles de suppression de ligne ayant des paliers avant, des impulsions de synchronisation horizontale et des paliers arrière avec des salves couleur ayant une fréquence de sous-porteuse de chrominance, ainsi que des signaux de luminance, et des signaux de chrominance modulés sur la sous-porteuse de chrominance ayant ladite fréquence de sous-porteuse de chrominance, et
un signal additionnel ayant des zones de faible énergie dans un spectre de fréquences dudit signal additionnel à n fois ladite fréquence de la sous-porteuse de chrominance pour n égal à zéro et n égal à un, ledit signal additionnel étant inséré dans au moins lesdits paliers arrière desdits intervalles de suppression le ligne de manière à chevaucher lesdites salves couleur, dans lequel le signal additionnel achemine des signaux sonores numériques ou un service de données de type télétexte.
